# FASCICULE DE BREVET EUROPEEN

(11) **EP 0 500 416 B1**
(45) Date de publication et mention de la délivrance du brevet: **12.04.1995**
(21) Numéro de dépôt: 92400347.8
(22) Date de dépôt: 11.02.1992
(51) Int. Cl.: B01D 53/04

(54) **Procédé de production d'oxygène par adsorption**
Verfahren zur Sauerstoffproduktion durch Absorption
Method for producing oxygen by adsorption

(30) Priorité: 20.02.1991 FR 9102009
(43) Date de publication de la demande: 26.08.1992
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Hay, Léon, F-75013 Paris (FR)
(74) Mandataire: Le Moenner, Gabriel

(56) Documents cités:
- EP-A- 0 248 720
- EP-A- 0 350 373
- GB-A- 2 155 805

## Description

La présente invention concerne la production d'oxygène par adsorption d'azote de l'air, du genre où, sur une pluralité n de colonnes d'adsorbant, on assure successivement, cycliquement, sur une desdites colonnes, avec décalage dans le temps T/n d'une colonne à la suivante, T étant la période du cycle :
a) une étape de production d'oxygène de durée x par soutirage de gaz selon une direction dite à co-courant, d'une colonne d'adsorbant du type zéolithe, à pression haute comprenant une pression maximale de cycle PM, avec admission d'air au moins partiellement au cours de cette étape ;
b) une étape de pompage de durée y à contre-courant, sous pression sous-atmosphérique, opérant une dépressurisation, pompage qui se poursuit, le cas échéant, pendant une purge par passage à contre-courant de gaz enrichi en oxygène, la pression minimale de cycle atteinte au cours de ladite étape de pompage étant Pm ;
c) une étape de repressurisation incorporant au plus tard avant l'étape de pompage, au moins une phase de repressurisation à contre-courant avec du gaz enrichi en oxygène.
   Voit à cet égard le document EP-A-0 248 720 qui enseigne un tel procédé comportant au moins quatre adsorbeurs.
   Cette façon de faire, destinée à la production industrielle de l'oxygène par fractionnement de l'air sur zéolithes, par exemple de type 5A ou 13X, fournit de l'air enrichi en oxygène, jusqu'à des teneurs en oxygène de 95%, les 5% résiduels étant essentiellement constitués d'argon.
   Dans un grand nombre d'applications, une qualité de production à 90/93% de teneur en oxygène est suffisante. Dans cette même gamme de teneurs, les quantités d'oxygène exigées par l'application peuvent aller de quelques tonnes/jour à quelques centaines de tonnes/jour.
   Le procédé rappelé plus haut s'est développé dans la gamme 10 à 50 T/jour d'oxygène, où il s'est révélé très compétitif en coût de revient par rapport à l'oxygène obtenu par voie cryogénique et livré sous forme liquide, ou par canalisation.
   Les différents types de cycles proposés pour la production d'oxygène comprennent généralement de deux à quatre adsorbeurs avec un seul adsorbeur en production, tandis que l'autre (ou les autres) sont soit en régénération, soit en phase intermédiaire (recyclage, repressurisation.....).
   Les cycles ayant une durée généralement comprise entre 90 secondes et quelques minutes, le volume des adsorbeurs pour un cycle donné, d'une durée déterminée, et avec un même type d'adsorbant, croît proportionnellement au débit à produire. Le respect des règles de vitesse de passage du gaz dans certaines phases impose une section minimale à la traversée du gaz, ce qui, pour des grandes tailles, devient directement ou indirectement le facteur limitant. Pour les adsorbeurs à géométrie cylindrique verticale et circulation verticale de gaz, c'est le diamètre des adsorbeurs qui devient excessif au-delà d'une certaine taille d'appareil (limitation du diamètre des fonds et viroles, problèmes de transport, etc...).
   Pour les adsorbeurs à géométrie cylindrique horizontale et circulation verticale de gaz, qui permettent de passer des débits plus grands que dans le cas précédent, à égalité de diamètre, le passage aux grands débits soulève les problèmes de distribution du gaz dans les collecteurs internes de part et d'autre de l'adsorbant, ainsi que l'augmentation importante des volumes morts dans ces collecteurs. On peut ainsi estimer à environ 60 T/jour la limitation d'une telle unité.
   Dans le cas où l'application exige des quantités en air suroxygéné ou en oxygène plus importantes, par exemple 300 T/jour, la solution actuelle est, soit d'installer plusieurs unités en parallèle (par exemple 3 unités de 50 T/jour chacune pour une demande de 150 T/jour), soit de passer à la solution par voie cryogénique.
   Le but de la présente invention est de repousser les limites actuelles en tonnage d'oxygène produit par unité de production. Plus précisément, l'objectif est de produire, sur une seule unité, une quantité d'oxygène qui pourrait être très supérieure à 60 T/jour, ce qui dans le coût de production diminuera la part de frais fixes (génie civil, engineering, montage, démarrage). Un autre objectif de l'invention est d'accroître la productivité de façon à réduire encore le coût de production par rapport à la mise en oeuvre de plusieurs unités de production, l'augmentation de productivité se traduisant par une diminution de l'investissement (matériel, adsorbant....). Encore un autre objectif de l'invention est de réduire la consommation d'énergie ce qui réduira encore le coût de production de l'oxygène.
   Ces objectifs de l'invention sont atteints par la prise en compte des mesures opératoires suivantes prises en combinaison globale :
d) le nombre d'adsorbeurs est d'au moins trois ;
e) la vitesse maximale du gaz traversant une colonne d'adsorption est inférieure à la vitesse d'attrition de l'adsorbant à un moment quelconque du cycle, et tend vers ladite limite au cours d'au moins une des étapes du cycle;
f) la durée de pompage y sous pression sous-atmosphérique pendant l'étape b) est supérieure au déphasage T/n, et au moins égale à la durée x de l'étape de production ;
g) la phase de pompage de la colonne d'adsorbant s'effectue en mettant en oeuvre sur ladite colonne d'adsorption successivement au moins deux systèmes de pompage opérant l'un à partir du début de pompage, un autre adapté à opérer jusqu'à la fin du pompage.

Par vitesse d'attrition on entend une vitesse de gaz, dans une colonne d'adsorption au-delà de laquelle les particules d'adsorbant sont mises en mouvement. Par système de pompage on entend soit une pompe et son moteur qui lui est propre, soit un étage ou corps de pompe et dans ce cas, plusieurs systèmes de pompage peuvent être reliés à un moteur unique.

L'invention est plus particulièrement mise en oeuvre selon les directives suivantes :
- on assure h) une dépressurisation entre l'étape de production et l'étape de pompage, de façon à fourni r du gaz de purge pour l'étape de purge éventuelle selon b) d'un autre adsorbeur ;
- on assure i) une dépressurisation à co-courant, entre l'étape de production et l'étape de pompage, de façon à fournir du gaz de repressurisation partielle pour l'étape c) de repressurisation ;
- on assure d'abord la dépressurisation selon i) puis la dépressurisation selon h) ;
- le gaz enrichi en oxygène de l'étape b) et/ou de l'étape c) est de l'oxygène de production ;
- le gaz de dépressurisation à co-courant est au moins partiellement introduit dans un stockage d'attente, duquel est prélevé au moins une partie du gaz de purge ;
- la phase de repressurisation à contre-courant selon c) s'effectue avec du gaz de production ;
- le gaz de production est stocké dans un réservoir tampon duquel est prélevé au moins une partie du gaz de repressurisation à contre-courant selon c) ;
- l'étape de production s'effectue au moins en partie à pression maximale ;
- l'étape de production s'effectue au moins en partie à pression croissante ;
- l'étape de production s'effectue au moins en partie à pression décroissante ;
- l'étape de repressurisation c) incorpore au moins une phase de repressurisation à co-courant avec de l'air ;
- la pression maximale de cycle PM est comprise entre 1.10⁵ et 1,6.10⁵ Pascal, tandis que la pression minimale de cycle est comprise entre 0,2.10⁵ et 0,5.10⁵ Pascal ;
- la durée de pompage selon b) est égale à un multiple entier de T/n ;
- le nombre d'adsorbeurs "n" est de quatre ;
- l'étape de pompage s'effectue avec deux systèmes de pompage sur une durée double de celle de l'étape de production qui est de T/n ;
- le nombre d'adsorbeurs est de cinq, l'étape de pompage est de durée égale à celle de l'étape de production qui est de 2T/5, le nombre d'adsorbeurs en production simultanée étant de deux à tout instant du cycle ;
- le nombre d'adsorbeurs est de six ou sept, le nombre de systèmes de pompage est de trois opérant pendant une durée de 3T/n, tandis que deux adsorbeurs sont en production simultanée pendant une durée de 2T/n et cela pendant tout le cycle.

C'est en comparant le cycle de l'invention avec un cycle connu qui lui est apparenté (mêmes étapes avec des adsorbeurs remplis du même adsorbant, mais de nombre inférieur), que l'on a constaté des accroissements de "production" (tonnes/jour) d'au moins 50% et jusqu'à 300% et des accroissements de productivité (Nm³/h/m³ adsorbant) d'au moins 10% et plus généralement de 12% à 20% selon les diverses mesures optionnelles rappelées ci-dessus.

C'est en augmentant le nombre d'adsorbeurs par rapport au cycle connu qui lui est apparenté, tout en gardant un temps de cycle sensiblement voisin, que l'on peut augmenter la production par unité.

C'est en augmentant le nombre d'adsorbeurs par rapport au cycle connu qui lui est apparenté, que l'on peut mieux optimiser les temps de phases ou d'étapes, tout en respectant leurs limites propres, ce qui conduit à un cycle plus performant, et notamment plus productif.

C'est en augmentant le nombre d'adsorbeurs par rapport au cycle connu qui lui est apparenté, en multipliant le nombre d'adsorbeurs simultanément en pompage, que l'on peut utiliser plusieurs systèmes de pompage, chacun d'eux étant adapté au domaine spécifique de pressions pour lequel il est utilisé.

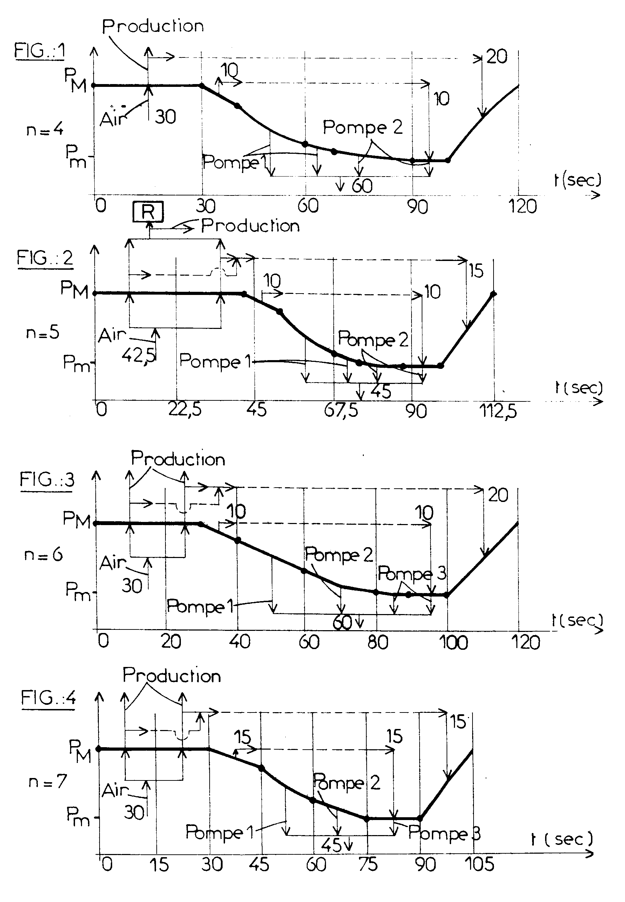

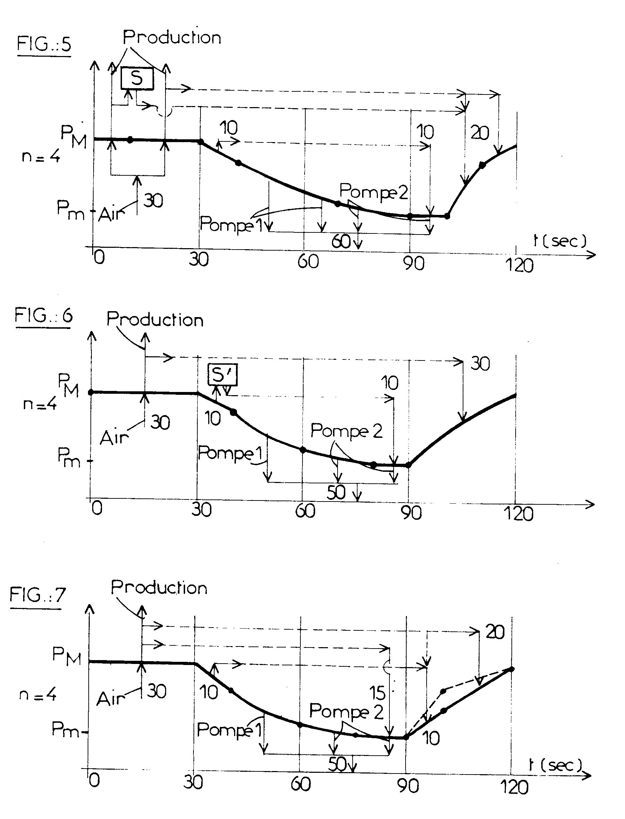

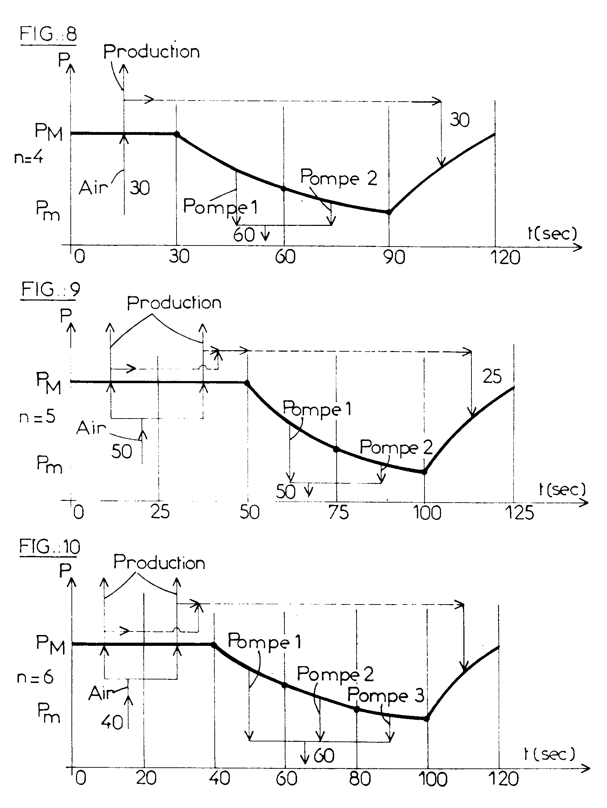

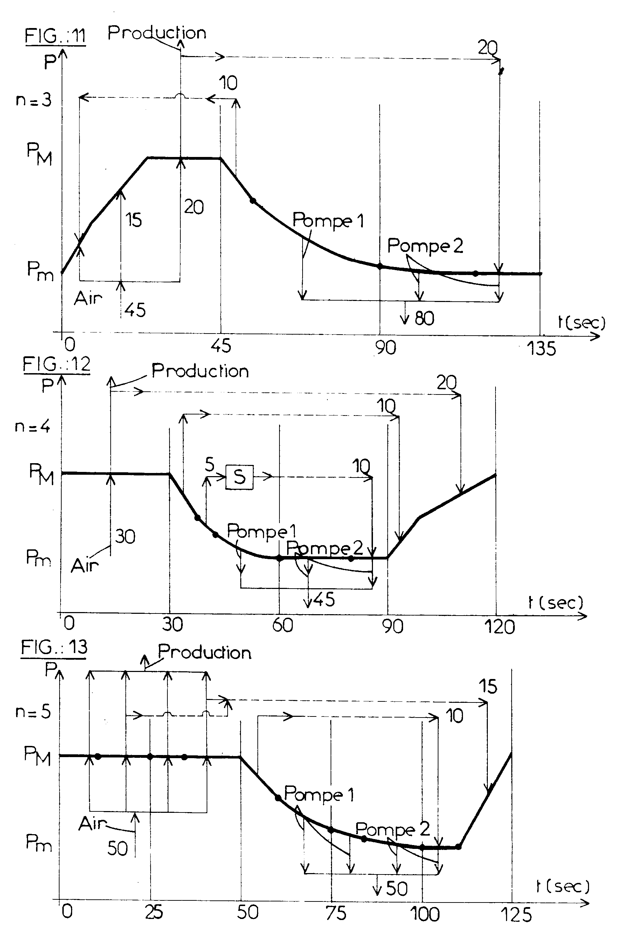

L'invention est maintenant illustrée en référence aux dessins annexés dans lesquels les figures 1 à 13 représentent les diagrammes pression (ordonnée)-temps (abscisse) de treize variantes de mise en oeuvre, la pression variant entre une pression maximale de cycle PM (entre 1.10⁵ et 1,6.10⁵ Pascal) et une pression minimale Pm de cycle (entre 0,2.10⁵ et 0,5.10⁵ Pascal).

Dans toutes les variantes des figures 1 à 10 et 12 à 13, le diagramme pression-temps (t) s'établit au temps 0 par le début de la phase de production d'oxygène (passage d'air dans la colonne d'adsorption selon le sens de circulation dit à co-courant représenté conventionnellement par une flèche selon la direction de l'ordonnée orientée dans le sens des ordonnées croissantes), alors qu'une circulation, à contre-courant, qui est inverse de celle de l'étape de production, c'est-à-dire de la "sortie" de l'oxygène produit vers l'"entrée" de l'air à fractionner, est représentée par une flèche selon la direction de l'ordonnée orientée vers les ordonnées décroissantes.

Ces différentes flèches sont raccordées soit à l'extrémité libre, vers les ordonnées croissantes pour indiquer un débit de production d'oxygène, ou d'air enrichi en oxygène soit orientées vers les ordonnées décroissantes pour indiquer un pompage sous pression sous-atmosphérique.

Les durées des différentes étapes sont notées dans des cercles et la durée du cycle T est le temps le plus élevé indiqué en abscisse.

Ceci étant explicité, on détaille maintenant les différents cycles illustrant l'invention, qui comportent certaines phases ou étapes parmi lesquelles, une étape de production, une phase de première dépressurisation, une phase de seconde dépressurisation, une étape de pompage comportant éventuellement une phase de purge et une étape de repressurisation. L'étape de pompage s'effectue par la mise en oeuvre d'une pluralité de systèmes de pompage pompe 1, pompe 2, etc....

Les temps indiqués dans les descriptions suivantes sont donnés à titre d'exemple, et sont sensiblement adaptés à l'utilisation d'adsorbant de granulométrie moyenne (billes de diamètre moyen d'environ 2 mm ou bâtonnets cylindriques de diamètre 1,6 mm).

### Figure 1

| | |
|---|---|
| Durée de cycle T | 120 sec. |
| Nombre d'adsorbeurs n | 4 |
| Adsorbeur en production | 1 |
| Durée étape production | 30 sec. |
| Durée première dépressurisation | 10 sec. |
| Durée pompage | 60 sec. |
| Durée purge | 10 sec. |
| Systèmes pompage | deux |
| Durée de repressurisation | 20 sec. |

### FIGURE 2

| | |
|---|---|
| Durée de cycle T | 112,5 sec. |
| Nombre d'adsorbeurs n | 5 |
| Adsorbeur en production | 2 |
| Durée étape production | 42,5 sec. |
| Durée première dépressurisation | 10 sec. |
| Durée pompage | 45 sec. |
| Durée purge | 10 sec. |
| Systèmes pompage | deux |
| Durée de repressurisation | 15 sec. |

On note qu'il existe un réservoir tampon R sur le gaz de production pour régulariser le débit de production utile et compléter au mieux la repressurisation finale.

### FIGURE 3

| | |
|---|---|
| Durée de cycle T | 120 sec. |
| Nombre d'adsorbeurs n | 6 |
| Adsorbeur en production | 1,5 |
| Durée étape production | 30 sec. |
| Durée première dépressurisation | 10 sec. |
| Durée pompage | 60 sec. |
| Durée purge | 10 sec. |
| Systèmes pompage | trois |
| Durée de repressurisation | 20 sec. |

### FIGURE 4

| | |
|---|---|
| Durée de cycle T | 105 sec. |
| Nombre d'adsorbeurs n | 7 |
| Adsorbeur en production | 2 |
| Durée étape production | 30 sec. |
| Durée première dépressurisation | 15 sec. |
| Durée pompage | 45 sec. |
| Durée purge | 15 sec. |
| Systèmes pompage | trois |
| Durée de repressurisation | 15 sec. |

### FIGURE 5

| | |
|---|---|
| Durée de cycle T | 120 sec. |
| Nombre d'adsorbeurs n | 4 |
| Adsorbeur en production | 1 |
| Durée étape production | 30 sec. |
| Durée première dépressurisation | 10 sec. |
| Durée pompage | 60 sec. |
| Durée purge | 10 sec. |
| Systèmes pompage | deux |
| Durée de repressurisation | 20 sec. |

On note qu'il existe un réservoir d'attente S pour une repressurisation plus brève que l'étape de production, de façon à égaliser le débit de production utile.

### FIGURE 6

| | |
|---|---|
| Durée de cycle T | 120 sec. |
| Nombre d'adsorbeurs n | 4 |
| Adsorbeur en production | 1 |
| Durée étape production | 30 sec. |
| Durée première dépressurisation | 10 sec. |
| Durée pompage | 50 sec. |
| Durée purge | 10 sec. |
| Systèmes pompage | deux |
| Durée de repressurisation | 30 sec. |

On note l'existence d'un réservoir de stockage S' qui permet de différer l'utilisation en purge du gaz de première dépressurisation, lorsque cette première dépressurisation ne coïncide pas dans le temps avec ladite purge d'un autre adsorbeur.

### FIGURE 7

| | |
|---|---|
| Durée de cycle T | 120 sec. |
| Nombre d'adsorbeurs n | 4 |
| Adsorbeur en production | 1 |
| Durée étape production | 30 sec. |
| Durée première dépressurisation | 10 sec. |
| Durée pompage | 50 sec. |
| Durée purge | 15 sec. |
| Systèmes pompage | deux |
| Durée de repressurisation | 30 sec. |

On note que la première dépressurisation sert au début de repressurisation d'un autre adsorbeur tandis que le gaz de purge est un débit prélevé, pendant la moitié de l'étape de production, sur l'oxygène produit. On a représenté en tirets une variante de première repressurisation selon laquelle outre le gaz provenant de l'adsorbeur en première dépressurisation, on adjoint du gaz de production.

### FIGURE 8

| | |
|---|---|
| Durée de cycle T | 120 sec. |
| Nombre d'adsorbeurs n | 4 |
| Adsorbeur en production | 1 |
| Durée étape production | 30 sec. |
| Durée pompage | 60 sec. |
| Systèmes pompage | deux |
| Durée repressurisation | 30 sec. |

### FIGURE 9

| | |
|---|---|
| Durée de cycle T | 125 sec. |
| Nombre d'adsorbeurs n | 5 |
| Adsorbeurs en production | 2 |
| Durée étape production | 50 sec. |
| Durée pompage | 50 sec. |
| Systèmes pompage | deux |
| Durée repressurisation | 25 sec. |

### FIGURE 10

| | |
|---|---|
| Durée de cycle T | 120 sec. |
| Nombre d'adsorbeurs n | 6 |
| Adsorbeurs en production | 2 |
| Durée étape production | 40 sec. |
| Durée pompage | 60 sec. |
| Systèmes pompage | trois |
| Durée repressurisation | 20 sec. |

### FIGURE 11

| | | |
|---|---|---|
| Durée de cycle T | | 135 sec. |
| Nombre d'adsorbeurs n | | 3 |
| Adsorbeur en production | | 1 à temps partiel |
| Durée étape production | | 20 sec. |
| Durée première dépressurisation | | 10 sec. |
| Durée pompage | | 80 sec. |
| Systèmes pompage | | deux |
| Durée repressurisation | - air + air enrichi | 10 sec. |
| | - air seul | 15 sec. |

### FIGURE 12

| | |
|---|---|
| Durée de cycle T | 120 sec. |
| Nombre d'adsorbeurs n | 4 |
| Adsorbeur en production | 1 |
| Durée étape production | 30 sec. |
| Durée première dépressurisation | 10 sec. |
| Durée deuxième dépressurisation | 5 sec. |
| Durée pompage | 45 sec. |
| Durée purge | 10 sec. |
| Systèmes pompage | deux |
| Durée repressurisation | 30 sec. |

### FIGURE 13

| | |
|---|---|
| Durée de cycle T | 125 sec. |
| Nombre d'adsorbeurs n | 5 |
| Adsorbeurs en production | 2 |
| Durée étape production | 50 sec. |
| Durée première dépressurisation | 10 sec. |
| Durée pompage | 50 sec. |
| Durée purge | 10 sec. |
| Systèmes pompage | deux |
| Durée repressurisation | 15 |

## Revendications

1. Procédé de production d'un gaz ayant jusqu'à 95% de teneur en oxygène notamment à débit supérieur à 60 T/jour par adsorption d'azote de l'air du genre où sur une pluralité "n" de colonnes d'adsorbant, on assure successivement, cycliquement selon une période T sur chacune desdites colonnes avec décalage dans le temps de T/n, d'une colonne à la suivante :
a) une étape de production d'oxygène de durée x par soutirage de gaz selon une direction dite à co-courant, d'une colonne d'adsorbant du type zéolithe, à pression haute comprenant une pression maximale de cycle PM, avec admission d'air au moins partiellement au cours de cette étape ;
b) une étape de pompage de durée y à contre-courant, sous pression sous-atmosphérique, opérant une dépressurisation, pompage qui se poursuit, le cas échéant, pendant une purge par passage à contre-courant de gaz enrichi en oxygène, la pression minimale de cycle atteinte au cours de ladite étape de pompage étant Pm ;
c) une étape de repressurisation incorporant au plus tard avant l'étape de pompage, au moins une phase de repressurisation à contre-courant avec du gaz enrichi en oxygène ;
caractérisé par la combinaison des mesures suivantes :
d) le nombre d'adsorbeurs est d'au moins trois ;
e) la vitesse maximale du gaz traversant une colonne d'adsorption est inférieure à la vitesse d'attrition de l'adsorbant à un moment quelconque du cycle, et tend vers ladite limite au cours d'au moins une des étapes du cycle;
f) la durée de pompage y sous pression sous-atmosphérique pendant l'étape b) est supérieure au déphasage T/n, et au moins égale à la durée x de l'étape de production ;
g) la phase de pompage de la colonne d'adsorbant s'effectue en mettant en oeuvre sur ladite colonne d'adsorption successivement au moins deux systèmes de pompage opérant l'un à partir du début de pompage, un autre adapté à opérer jusqu'à la fin du pompage.

2. Procédé de production d'oxygène selon la revendication 1, caractérisé en ce qu'on assure h) une dépressurisation à co-courant entre l'étape de production et l'étape de pompage, de façon à fournir du gaz de purge pour la purge éventuelle selon b) d'un autre adsorbeur.

3. Procédé de production d'oxygène selon la revendication 1, caractérisé en ce qu'on assure i) une dépressurisation à co-courant, entre l'étape de production et l'étape de pompage, de façon à fournir du gaz de repressurisation partielle pour l'étape c) de repressurisation.

4. Procédé de production d'oxygène selon les revendications 2 et 3, caractérisé en ce qu'on assure d'abord la dépressurisation selon i) puis la dépressurisation selon h).

5. Procédé de production d'oxygène selon l'une quelconque des revendications 1 à 4, caractérisé en ce que le gaz enrichi en oxygène de l'étape b) et/ou de l'étape c) est de l'oxygène de production.

6. Procédé de production d'oxygène selon la revendication 2, caractérisé en ce que le gaz de dépressurisation à co-courant est au moins partiellement introduit dans un stockage d'attente, duquel est prélevé au moins une partie du gaz de purge.

7. Procédé de production d'oxygène selon l'une quelconque des revendications 1 à 6, caractérisé en ce que la phase de repressurisation à contre-courant de l'étape c) de repressurisation s'effectue avec du gaz de production.

8. Procédé de production d'oxygène selon la revendication 7, caractérisé en ce qu'on prévoit un stockage tampon de gaz de production duquel est prélevé au moins une partie du gaz de repressurisation à contre-courant selon c).

9. Procédé de production d'oxygène selon l'une quelconque des revendications 1 à 8, caractérisé en ce que l'étape de production s'effectue au moins en partie à pression maximale.

10. Procédé de production d'oxygène selon l'une quelconque des revendications 1 à 9, caractérisé en ce que l'étape de production s'effectue au moins en partie à pression croissante.

11. Procédé de production d'oxygène selon l'une quelconque des revendications 1 à 10, caractérisé en ce que l'étape de production s'effectue au moins en partie à pression décroissante.

12. Procédé de production d'oxygène selon l'une quelconque des revendications 1 à 11, caractérisé en ce que l'étape de repressurisation c) incorpore au moins une phase de repressurisation à co-courant avec de l'air.

13. Procédé de production d'oxygène selon l'une quelconque des revendications 1 à 12, caractérisé en ce que la pression maximale de cycle PM est comprise entre 1.10⁵ et 1,6.10⁵ Pascal, tandis que la pression minimale de cycle est comprise entre 0,2.10⁵ et 0,5.10⁵ Pascal.

14. Procédé de production d'oxygène selon l'une quelconque des revendications 1 à 13, caractérisé en ce que la durée de pompage selon b) est egale à un multiple entier de T/n.

15. Procédé de production d'oxygène selon l'une quelconque des revendications 1 à 14, caractérisé en ce que le nombre d'adsorbeurs "n" est de quatre.

16. Procédé de production d'oxygène selon la revendication 15, caractérisé en ce que l'étape de pompage s'effectue avec deux systèmes de pompage sur une durée double de celle de l'étape de production qui est de T/n.

17. Procédé de production d'oxygène selon l'une quelconque des revendications 1 à 14, caracterisé en ce que le nombre d'adsorbeurs est de cinq, en ce que l'étape de pompage est de durée égale à celle de l'étape de production qui est de 2T/5, le nombre d'adsorbeurs en production simultanée étant de deux à tout instant du cycle.

18. Procédé de production d'oxygène selon l'une quelconque des revendications 1 à 14, caractérisé en ce que le nombre d'adsorbeurs est de six ou sept, en ce que le nombre de systèmes de pompage est de trois opérant pendant une durée de 3T/n, tandis que deux adsorbeurs sont à tout instant, en production simultanée pendant une durée de 2T/n.

## Claims

1. Process for the production of a gas having up to 95 % oxygen content notably at a flow rate greater than 60 T/day by means of absorbing the nitrogen in the air such that, on a plurality "n" of adsorbent columns, the following stages are ensured successively and cyclically for a period T on each of the said columns with a time lag of T/n, from one column to the next :
a) a stage for the production of oxygen of duration x by withdrawing gas in a so-called co-current direction, from an adsorbent column of the zeolite type, at high pressure comprising a maximum cycle pressure PM, with at least partial admission of air during this stage ;
b) a counter-current pumping stage of duration y, under sub-atmospheric pressure, bringing about depressurization, pumping being carried out, as appropriate, during a purge by passing gas enriched in oxygen in a counter-current direction, the minimum cycle pressure attained during the said pumping stage being Pm ;
c) a repressurization stage incorporating before the pumping stage at the latest, at least one counter-current repressurization phase with gas enriched in oxygen ; characterized by a combination of the following measures :
d) the number of adsorbers is at least three ;
e) the maximum velocity of the gas passing through an adsorption column is less than the attrition rate of the adsorbent at any moment whatsoever in the cycle, and tends towards the said limit during at least one of the stages of the cycle :
f) the duration of pumping y under sub-atmospheric pressure during stage b) is greater than the time lag T/n, and at least equal to the duration x of the production stage ;
g) the pumping stage of the adsorbent column is carried out by successively putting into operation at least two pumping systems on the said column, one operating from the start of pumping and the other adapted to operate until the end of pumping.

2. Process for the production of oxygen according to Claim 1, characterized in that counter-current depressurization h) is ensured between the production stage and the pumping stage, so as to provide a purge gas for the possible purging according to b) of another adsorber.

3. Process for the production of oxygen according to Claim 1, characterized in that a counter-current depressurization i) is ensured between the production stage and the pumping stage, so as to provide partially repressurized gas for the repressurization stage c).

4. Process for the production of oxygen according to Claims 2 and 3, characterized in that depressurization is first of all ensured according to i) followed by depressurization according to h).

5. Process for the production of oxygen according to any one of Claims 1 to 4, characterized in that the gas enriched in oxygen of stage b) and/or of stage c) is production oxygen.

6. Process for the production of oxygen according to Claim 2, characterized in that the counter-current depressurization gas is at least partially introduced into a holding store, from which at least part of the purge gas is taken.

7. Process for the production of oxygen according to any one of Claims 1 to 6, characterized in that the counter-current repressurization phase of the repressurization stage c) is carried out with production gas.

8. Process for the production of oxygen according to Claim 7, characterized in that a buffer stock of production gas is provided from which at least part of the counter-current repressurization gas according to c) is taken.

9. Process for the production of oxygen according to any one of Claims 1 to 8, characterized in that the production stage is carried out at least partly at maximum pressure.

10. Process for the production of oxygen according to any one of Claims 1 to 9, characterized in that the production stage is carried out at least partly at increasing pressure.

11. Process for the production of oxygen according to any one of Claims 1 to 10, characterized in that the production stage is carried out at least partly at decreasing pressure.

12. Process for the production of oxygen according to any one of Claims 1 to 11, characterized in that the repressurization stage c) incorporates at least one counter-current repressurization phase with air.

13. Process for the production of oxygen according to any one of Claims 1 to 12, characterized in that the maximum cycle pressure PM lies between 1×10⁵ and 1.6×10⁵ Pascal, whilst the minimum cycle pressure lies between 0.2 × 10⁵ and 0.5 × 10⁵ Pascal.

14. Process for the production of oxygen according to any one of Claims 1 to 13, characterized in that the duration of pumping according to b) is equal to a whole multiple of T/n.

15. Process for the production of oxygen according to any one of Claims 1 to 14, characterized in that the number "n" of adsorbers is four.

16. Process for the production of oxygen according to Claim 15, characterized in that the pumping stage is carried out with two pumping systems over a period double that of the production stage which is T/n.

17. Process for the production of oxygen according to any one of Claims 1 to 14, characterized in that the number of adsorbers is five and in that the pumping stage lasts for a period equal to that of the production stage which is 2T/5, the number of adsorbers in simultaneous production being two at any instant of the cycle.

18. Process for the production of oxygen according to any one of Claims 1 to 14, characterized in that the number of adsorbers is six or seven and in that the number of pumping systems is three operating for a period of 3T/n, whilst two adsorbers are at any instant in simultaneous production over a period of 2T/n.

## Patentansprüche

1. Verfahren zur Erzeugung eines Gases mit einem Gehalt von bis zu 95 % an Sauerstoff, insbesondere mit einem Durchsatz oberhalb von 60 t/Tag durch Adsorption von Luftsauerstoff, wobei über eine Anzahl n von Adsorbenssäulen hinweg aufeinanderfolgend und zyklisch mit einer Periode T auf jeder der Säulen mit einer Zeitverschiebung T/n von einer Säule zur nächsten die folgenden Schritte durchgeführt werden:
a) ein Schritt der Zeitdauer x zur Erzeugung von Sauerstoff durch Abziehen von Gas in einer sogenannten Mitstromrichtung von einer Adsorbenssäule vom Zeolithtyp bei Hochdruck, der einen maximalen Zyklusdruck PM umfaßt, mit zumindest teilweisem Lufteinlaß während dieses Schritts;
b) einen Gegenstrom-Pumpschritt der Zeitdauer y bei Unterdruck, der einen Druckabbau bewirkt, wobei das Pumpen gegebenenfalls während eines Spülens geschieht, das durch Hindurchführen von mit Sauerstoff angereichertem Gas im Gegenstrom bewirkt wird, wobei der im Verlauf des Pumpschritts erzielte minimale Pumpdruck Pm ist;
c) einen Schritt zur erneuten Druckbeaufschlagung, der spätestens vor dem Pumpschritt zumindest eine Phase zur erneuten Druckbeaufschlagung im Gegenstrom mit an Sauerstoff angereichertem Gas beinhaltet; gekennzeichnet durch die Kombination der folgenden Maßnahmen:
d) die Anzahl an Adsorbern ist zumindest drei;
e) die maximale Geschwindigkeit des eine Adsorptionssäule durchquerenden Gases liegt unterhalb der Geschwindigkeit, bei der ein Aneinanderreiben des Adsorbens zu irgend einem Zeitpunkt des Zyklus stattfindet, und strebt gegen diesen Grenzwert während mindestens einem der Schritte des Zyklus;
f) die Pumpdauer y bei Unterdruck während des Schritts (b) ist größer als die Phasenverschiebung T/n und mindestens gleich der Zeitdauer x des Erzeugungsschritts;
g) die Pumpphase der Adsorbenssäule wird durchgeführt, indem man auf die Adsorptionssäule nacheinander zumindest zwei Pumpsysteme wirken läßt, von denen das eine vom Beginn des Pumpens an betrieben wird und das andere für einen Betrieb bis zum Ende des Pumpens ausgelegt ist.

2. Verfahren zur Erzeugung von Sauerstoff nach Anspruch 1, **dadurch gekennzeichnet**, daß man h) einen Druckabbau in Mitstromrichtung zwischen dem Erzeugungsschritt und dem Pumpschritt derart durchführt, daß ein Spülgas für das eventuelle Spülen gemäß b) eines anderen Adsorbers bereitgestellt wird.

3. Verfahren zur Erzeugung von Sauerstoff nach Anspruch 1, **dadurch gekennzeichnet**, daß man i) einen Druckabbau in Mitstromrichtung zwischen dem Erzeugungsschritt und dem Pumpschritt derart durchführt, daß ein Gas für den teilweisen Wiederaufbau des Drucks für den Druckwiederaufbauschritt (c) bereitgestellt wird.

4. Verfahren zur Erzeugung von Sauerstoff nach Anspruch 2 und 3, **dadurch gekennzeichnet**, daß zuerst der Druckabbau gemäß i) und danach der Druckabbau gemäß h) durchgeführt wird.

5. Verfahren zur Erzeugung von Sauerstoff nach einem der Ansprüche 1 bis 4, **dadurch gekennzeichnet**, daß das mit Sauerstoff angereicherte Gas des Schrittes b) und/oder des Schrittes c) Produktionssauerstoff ist.

6. Verfahren zur Erzeugung von Sauerstoff nach Anspruch 2, **dadurch gekennzeichnet**, daß das Gas zum Druckabbau in Mitstromrichtung zumindest teilweise in einen Bereitschaftsspeicher eingeführt wird, aus dem zumindest ein Teil des Spülgases entnommen wird.

7. Verfahren zur Erzeugung von Sauerstoff nach einem der Ansprüche 1 bis 6, **dadurch gekennzeichnet**, daß die Phase der erneuten Druckbeaufschlagung im Gegenstrom des Schritts (c) zur erneuten Druckbeaufschlagung mit Produktionsgas durchgeführt wird.

8. Verfahren zur Erzeugung von Sauerstoff nach Anspruch 7, **dadurch gekennzeichnet**, daß man einen Pufferspeicher für Produktionsgas vorsieht, aus dem zumindest ein Teil des Gases zur erneuten Druckbeaufschlagung im Gegenstrom gemäß c) entnommen wird.

9. Verfahren zur Erzeugung von Sauerstoff nach einem der Ansprüche 1 bis 8, **dadurch gekennzeichnet**, daß der Schritt der Erzeugung zumindest zum Teil bei maximalem Druck durchgeführt wird.

10. Verfahren zur Erzeugung von Sauerstoff nach einem der Ansprüche 1 bis 9, **dadurch gekennzeichnet**, daß der Schritt zur Erzeugung zumindest zum Teil bei wachsendem Druck durchgeführt wird.

11. Verfahren zur Erzeugung von Sauerstoff nach einem der Ansprüche 1 bis 10, **dadurch gekennzeichnet**, daß der Schritt zur Erzeugung zumindest zum Teil bei abfallendem Druck durchgeführt wird.

12. Verfahren zur Erzeugung von Sauerstoff nach einem der Ansprüche 1 bis 11, **dadurch gekennzeichnet**, daß der Schritt zur erneuten Druckbeaufschlagung (c) zumindest eine Phase zur erneuten Druckbeaufschlagung in Mitstromrichtung mit Luft beinhaltet.

13. Verfahren zur Erzeugung von Sauerstoff nach einem der Ansprüche 1 bis 12, **dadurch gekennzeichnet**, daß der maximale Zyklusdruck PM zwischen 1,0 x 10⁵ und 1,6 x 10⁵ Pascal liegt, während der minimale Zyklusdruck zwischen 0,2 x 10⁵ und 0,5 x 10⁵ Pascal liegt.

14. Verfahren zur Erzeugung von Sauerstoff nach einem der Ansprüche 1 bis 13, **dadurch gekennzeichnet**, daß die Pumpdauer gemäß b) gleich einem ganzzahligen Vielfachen von T/n ist.

15. Verfahren zur Erzeugung von Sauerstoff nach einem der Ansprüche 1 bis 14, **dadurch gekennzeichnet**, daß die Anzahl an Adsorbern gleich vier ist.

16. Verfahren zur Erzeugung von Sauerstoff nach Anspruch 15, **dadurch gekennzeichnet**, daß der Pumpschritt mit zwei Pumpsystemen über eine Dauer durchgeführt wird, die doppelt so groß ist, wie diejenige des Schritts zur Erzeugung, welche T/n ist.

17. Verfahren zur Erzeugung von Sauerstoff nach einem der Ansprüche 1 bis 14, **dadurch gekennzeichnet**, daß die Anzahl an Adsorbern gleich fünf ist, daß der Pumpschritt eine Dauer hat, die gleich derjenigen des Schritts der Erzeugung ist, welche 2T/5 ist, wobei die Anzahl an Adsorbern in gleichzeitiger Erzeugung in jedem Zeitpunkt des Zyklus gleich zwei ist.

18. Verfahren zur Erzeugung von Sauerstoff nach einem der Ansprüche 1 bis 14, **dadurch gekennzeichnet**, daß die Anzahl an Adsorbern gleich sechs oder sieben ist, daß die Anzahl an Pumpsystemen gleich drei ist, die während einer Dauer von 3T/n arbeiten, während zwei Adsorber zu jedem Zeitpunkt während einer Dauer von 2T/n in gleichzeitiger Erzeugung sind.
